# EUROPÄISCHE PATENTSCHRIFT

(11) **EP 2 236 272 B1**
(45) Veröffentlichungstag und Bekanntmachung des Hinweises auf die Patenterteilung: **04.07.2012**
(21) Anmeldenummer: 10400008.8
(22) Anmeldetag: 11.02.2010
(51) Int. Cl.: B29D 30/00, G05B 19/04, G05B 19/418

(54) **Verfahren und Vorrichtung zur Steuerung der Produktion von Reifen**
Method and device for controlling the production of tyres
Procédé et dispositif de commande de la production de pneus

(30) Priorität: 12.02.2009 DE 102009010322
(43) Veröffentlichungstag der Anmeldung: 06.10.2010
(73) Patentinhaber: Harburg-Freudenberger Maschinenbau GmbH, 21079 Hamburg (DE)
(72) Erfinder: Gronemann, Jürgen, 74532 Ilshofen (DE); Meyns, Ronald, 21037 Hamburg (DE)
(74) Vertreter: Klickow, Hans-Henning

(56) Entgegenhaltungen:
- EP-A2- 0 709 179
- EP-A2- 1 447 728
- WO-A2-02/082192
- JP-A- 62 290 509
- US-A- 5 221 406
- US-A1- 2005 260 294

## Beschreibung

Die Erfindung betrifft Verfahren zur Steuerung der Produktion von Reifen, bei dem der Produktionsprozeß in mindestens zwei zeitlich aufeinanderfolgende Prozeßschritte unterteilt ist und bei dem ein während der einzelnen Prozeßschritte beaufschlagter Reifenrohling und/oder mindestens ein bei mindestens einem der Prozeßschritte verwendetes Werkzeug und/oder Material von mindestens zwei Handhabungsvorrichtungen bewegt werden, sowie bei dem mindestens eine einem ersten Prozeßschritt zugeordnete Bewegung zeitlich wenigstens teilweise überlappend mit einer einem zweiten Prozeßschritt zugeordneten Bewegung durchgeführt wird.

Die Erfindung betrifft darüber hinaus eine Vorrichtung zur Steuerung der Produktion von Reifen, die eine Ablaufsteuerung zur Koordinierung von mindestens zwei zeitlich aufeinander folgenden Prozeßschritten aufweist, sowie die mindestens zwei Handhabungseinrichtungen zur Positionierung eines Reifenrohlings und/oder mindestens eines für die Durchführung mindestens eines der Prozeßschritte vorgesehenen Werkzeuges und/oder des Materials aufweist.

Die Herstellung von Reifen wird typischerweise unter Verwendung von Reifenaufbaumaschinen durchgeführt. Eine derartige Reifenaufbaumaschine umfaßt in der Regel eine oder mehrere Trommeln, auf die streifenartige Materialien aus Rohgummi aufgewickelt werden. Bei bestimmten Anwendungen werden zusätzlich auch Verstärkungen aus Stahlseilabschnitten oder Fasermaterialien aus Kunststoff verwendet. Nach einem fertigen Aufbau des Reifens wird dieser von der Reifenaufbautrommel abgenommen und einer Heizpresse zugeführt, um die Vulkanisation des Gummis vorzunehmen.

Bei der Produktion eines Reifens ist es somit erforderlich, eine Mehrzahl von Komponenten zusammenzusetzen. Jeder Reifenkomponente ist ein vom Hersteller der Reifenaufbaumaschine vorgegebener Teilprozeß zugeordnet, der seinerseits häufig aus einer Mehrzahl von Einzelaktionen besteht. Während der einzelnen Teilprozesse erforderliche Bewegungen des Reifenrohlings oder von verwendeten Werkzeugen oder von zugeführten Materialien werden typischerweise von Servomotoren oder anderen Aktoren durchgeführt.

Um eine hohe Flexibilität bei der Konfiguration des Reifens zu ermöglichen, werden gemäß dem Stand der Technik alle Teilprozesse als abgeschlossene und zeitlich gegeneinander abgegrenzte Prozeßschritte durchgeführt. Zum Abschluß eines bestimmten Prozeßschrittes befinden sich alle gegebenenfalls bewegten Komponenten in einem Ruhezustand und nach Ablauf einer Sicherheitszeit erfolgt eine erneute Bewegungsaufnahme zur Durchführung des nächsten Teilprozesses. Dieses Verfahren unterstützt ein Weglassen oder Ergänzen von Teilprozessen sowie eine Änderung der Reihenfolge der einzelnen Prozeßschritte, die vom jeweiligen Maschinenbetreiber vorgegeben werden können.

Ebenfalls unterstützt eine entsprechende Durchführung der Teilprozesse eine Anpassung der Parameter des Reifenaufbauprozesses an die konkreten Anforderungen und Gegebenheiten des Maschinenbetreibers. Beispielsweise können Geschwindigkeiten der einzelnen Teilprozesse variiert werden, soweit hierdurch nicht in die angewendete Verfahrenstechnik eingegriffen wird und gegebenenfalls zu überbrückende Distanzen können an die räumlichen Verhältnisse angepaßt werden. Ebenfalls ist eine einfache Adaption je nach dem konkret herzustellenden Reifentyp möglich.

Zur Unterstützung dieser Steuerung des Reifenaufbauprozesses entsprechend dem Stand der Technik weist eine konventionelle Reifenaufbaumaschine eine zentrale Steuerung auf, in der alle Abläufe der Maschine hierarchisch strukturiert programmiert werden. Von hierdurch vorgegebenen oberen Softwareebenen werden Befehle zur Ausführung bestimmter Operationen an die unteren Softwareebenen übermittelt. In den unteren Softwareebenen werden die Kommandos für die verwendeten Aktoren, beispielsweise die Servomotoren, erzeugt. Anschließend erfolgt eine Übermittlung dieser Kommandos an eine externe Servosteuerung unter Verwendung eines implementierten Bus-Systems.

Die externe Servosteuerung dekodiert den übermittelten Befehl und führt die entsprechenden Aktionen aus. Nach einer Beendigung der vorgegebenen Bewegungssequenz der Servoantriebe wird eine Rückmeldung über die Prozeßdurchführung an die zentrale Steuerung übermittelt, typischerweise ebenfalls unter Verwendung des Bus-Systems. Als zentrale Steuerung wird in der Regel eine speicherprogrammierbare Steuerung verwendet.

Die von der externen Servosteuerung übermittelte Rückmeldung wird zuerst in den unteren Softwareebenen ausgewertet und dann an die übergeordneten Ebenen weitergeleitet. Anschließend wird von den übergeordneten Ebenen dann ein jeweiliger Folgeschritt für den nächsten durchzuführenden Teilprozeß ausgelöst.

Sowohl die jeweiligen Datenübertragungszeiten sowie die Datenverarbeitungszeiten als auch vorgesehene zeitliche Sicherheitsabstände zwischen den einzelnen Bewegungen der verwendeten Servomotoren führen zu Totzeiten. Die Übertragungs- und Verarbeitungszeiten von der oberen Softwareebene über die untere Softwareebene und das Bus-System zur Servorsteuerung sowie zurück in umgekehrter Richtung generieren je durchzuführender Ansteuerung des Servomotors Totzeiten von etwa 200 ms. Bei einer typischen Durchführung von etwa 30 Servomotorbewegungen je herzustellendem Reifen fallen allein hierdurch Totzeiten etwa 6 s an. Unter Berücksichtigung weiterer zeitlicher Sicherheitsabstände zwischen einzelnen Prozeßschritten ergeben sich gegenüber den reinen Prozeßzeiten Zykluszeitverlängerungen von etwa 15% allein aufgrund dieser Totzeiten und Sicherheitsabstände.

Aus der US 5 221 406 A ist bereits ein Verfahren zur Steuerung der Produktion von Reifen bekannt, bei dem der Produktionsprozeß in mindestens zwei zeitlich aufeinander folgende Prozeßschritte unterteilt ist. Mehrere Prozeßschritte können zeitgleich durchgeführt werden.

In der EP 1 447 728 A2 wird ein Verfahren zum synchronisierten Betrieb von Maschinen beschrieben. Die Synchronisation erfolgt unter Verwendung einzeln angetriebener Achsen.

In der US 2005/260 294 A1 wird eine Reifenheizpresse beschrieben. Eine Beladeeinrichtung für den Reifenrohling sowie die Reifenheizpresse sind miteinander gekoppelt.

Aufgabe der vorliegenden Erfindung ist es, ein Verfahren der einleitend genannten Art derart zu verbessern, daß eine schnellere Durchführung des Gesamtprozesses unterstützt wird.

Diese Aufgabe wird erfindungsgemäß dadurch gelöst, daß die Handhabungseinrichtungen während mindestens eines Teiles Ihres Bewegungsablaufes gleichzeitig angetrieben werden.

Weitere Aufgabe der vorliegenden Erfindung ist es, eine Vorrichtung der einleitend genannten Art derart zu konstruieren, daß eine schnellere Prozeßdurchführung unterstützt wird.

Diese Aufgabe wird erfindungsgemäß dadurch gelöst, daß die Handhabungseinrichtungen während mindestens eines Teiles Ihres Bewegungsablaufes gleichzeitig angetrieben sind.

Durch die zeitliche Überlappung von Bewegungen ist es zum einen möglich, Abbremszeiten und Beschleunigungszeiten zu verkürzen, da eine Übergabe nicht bei einem Stillstand des jeweiligen Werkstückes, sondern bei einer Bewegungsdurchjeweiligen Werkstückes, sondern bei einer Bewegungsdurchführung erfolgt. Eine weitere Verkürzung der erforderlichen Transportzeiten kann auch dadurch erreicht werden, daß ruckfreie Bewegungen und gerundete Bewegungsbahnen durchgeführt werden. Es fallen Wartezeiten der jeweiligen Prozeßkomponenten weg und es können gemäß einer Ausführungsvariante steilere Rampen beim Hoch- und Runterfahren von Geschwindigkeiten realisiert werden, um nicht prozeßrelevante Zeiten zu verkürzen. Darüber hinaus können auch nicht prozeßrelevante Bewegungen vereinfacht und die entsprechenden Bewegungszeiten verkürzt werden. Die neuartige Steuerungsstruktur ermöglicht eine Minimierung der jeweiligen Kommunikationszeiten während der Prozeßdurchführung.

Für die Verkürzung der Kommunikationszeiten während der Prozeßdurchführung ist es insbesondere wesentlich, daß eine übergeordnete Leitachse bereits zeitlich deutlich vor einer Bewegungsaufnahme durch den Aktor an eine lokale Steuerung des Aktors die Information übermittelt, daß zu einem exakt vorgegebenen Zeitpunkt die entsprechende Bewegung erfolgen soll. Nach einer Überprüfung des Zustandes des Aktors und dessen kinematischer Bedingungen meldet die lokale Steuerung an die Leitachse zurück, ob die betreffende Bewegung exakt zum vorgegebenen Zeitpunkt durchgeführt werden kann. Gegebenenfalls auftretende Totzeiten sowie aus Trägheiten resultierende Verzögerungen können hierbei berücksichtigt werden. Bei einer fehlenden Fähigkeit oder Bereitschaft des Aktors zur Durchführung der vorgegebenen Bewegung zum vorgegebenen Zeitpunkt erfolgt ebenfalls bereits zeitlich vor dem entsprechenden Zeitpunkt eine Rückmeldung an die Leitachse, so daß eine Taktfortschaltung so lange unterbrochen werden kann, bis die erforderliche Bereitschaft vorliegt.

Totzeiten können insbesondere dadurch minimiert bzw. vermieden werden, daß eine kontinuierlich laufende Leitachse und der Leitachse untergeordnete lokale Steuerungen der Aktoren verwendet werden.

Gemäß einem Ausführungsbeispiels ist vorgesehen, daß von der Leitachse eine Ventilansteuerung durchgeführt wird.

Eine Zeitsteuerung kann dadurch erfolgen, daß die Leitachse bei einem Nichteintreten einer Weiterschaltbedingung angehalten wird.

Insbesondere ist vorgesehen, daß die Leitachse eine zeitliche Koordinierung von Teilprozessen durchführt.

Zur Strukturierung von komplexen Prozeßabläufen erweist es sich als vorteilhaft, daß mehrere lokale Steuerungen der Aktoren einer gemeinsamen Leitachse zugeordnet werden.

Gemäß einer weiteren typischen Ausführungsform ist daran gedacht, daß von der Leitachse Servomotoren angesteuert werden.

Ein besonderes Erfindungsprinzip ist darin zu sehen, daß die Leitachse als virtuelle Achse realisiert wird.

Ebenfalls erweist es sich als wesentlich, daß die Leitachse durch ein Digitalprogramm realisiert wird.

Eine Verkürzung von Prozeßnebenzeiten wird auch dadurch unterstützt, daß Übergaben mindestens teilweise mit einer Geschwindigkeit ungleich null durchgeführt werden.

Eine weitere Minimierung von Prozeßnebenzeiten wird dadurch erreicht, daß mindestens teilweise kontinuierliche Bewegungsbahnen durchlaufen werden.

In den Zeichnungen sind Ausführungsbeispiele der Erfindung schematisch dargestellt. Es zeigen:
- Fig. 1: eine schematische Darstellung von Geschwindig- keitsverläufen bei drei Teilprozessen mit zugeord- neter Leitachse,
- Fig. 2: ein Blockschaltbild zur veranschaulichung einer Programmstruktur gemäß dem erfindungsgemäßen Ver- fahren,
- Fig. 3: ein Ablaufschema einer typischen Komponente ent- sprechend dem erfindungsgemäßen Verfahren und
- Fig. 4: ein Diagramm zur veranschaulichung einer Positio- nierung der Leitachse.

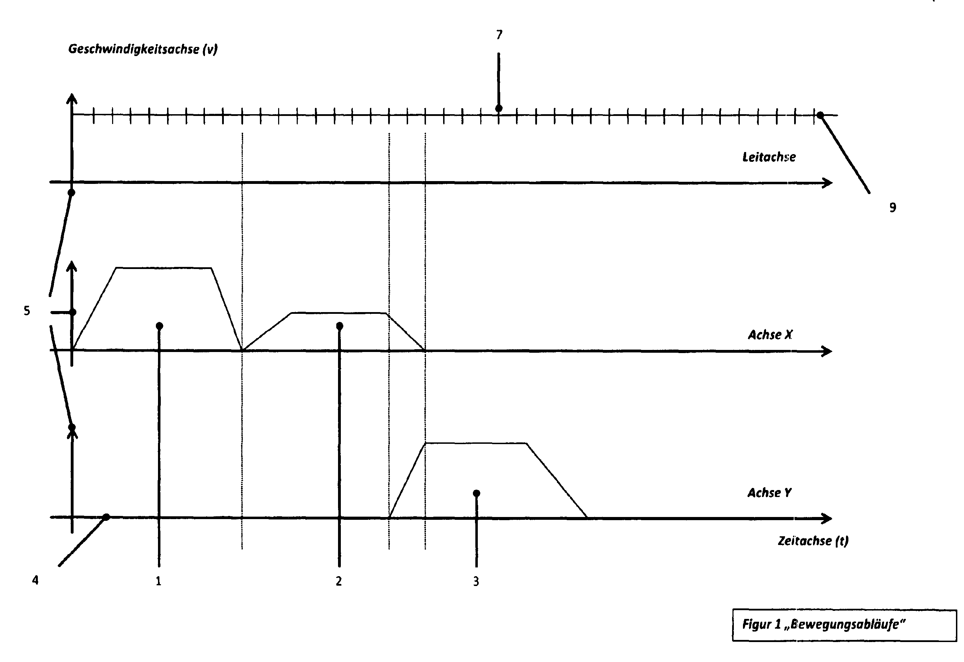

Fig. 1 zeigt eine schematische Darstellung von drei Bewegungsabläufen (1, 2, 3), die jeweils Teilprozessen bei der Reifenherstellung zugeordnet sind. Aufgetragen ist hierbei der Verlauf bezüglich einer zeitachse (4) und einer Geschwindigkeitsachse (5). Eine Zuordnung der einzelnen Bewegungsabläufe (1, 2, 3) wird von einer Leitachse (9) koordiniert.

Die Bewegungsabläufe (1, 2, 3) weisen jeweils einen rampenförmigen Anstieg, einen im wesentlichen mit konstanter Geschwindigkeit durchlaufenen Bereich sowie einen Rampenabfall auf. Im Bereich der Leitachse (9) ist eine Taktung (7) eingezeichnet.

Die Bewegungsabläufe (1, 2) verlaufen derart, daß sich unmittelbar an den Bewegungsablauf (1) der Bewegungsablauf (2) ohne entsprechende Totzeit anschließt. Die Bewegungsabläufe (2, 3) überlappen sich im Bereich der abfallenden bzw. ansteigenden Rampe derart, daß eine Übergabe des betreffenden Werkstückes mit einer Geschwindigkeit ungleich Null erfolgt.

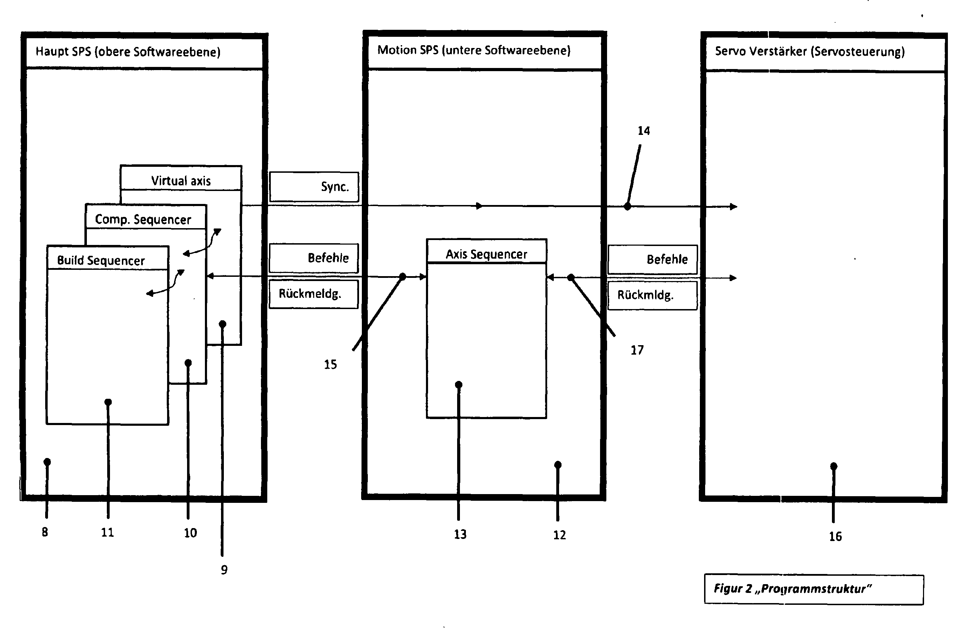

Fig. 2 veranschaulicht die Programmstruktur gemäß dem erfindungsgemäßen Verfahren. Eine obere Softwareebene (8) umfaßt eine virtuelle Achse (9), einen Componente Sequenzer (10) sowie einen Build Sequenzer (11). Eine untere Softwareebene (12) ist mit einem Achsensequenzer (13) versehen. Die obere Softwareebene (8) und die untere Softwareebene (12) sind über eine Synchronisation (14) gekoppelt. Über einen Kommunikationsweg (15) können zwischen der oberen Softwareebene (8) und der unteren Softwareebene (12) Befehle und Rückmeldungen ausgetauscht werden.

Der Componente Sequenzer (10) gibt die Abfolge innerhalb einer Komponente vor. Es werden alle benötigten Baugruppen mit einer entsprechenden Aktion angefordert. Der Buildsequencer (11) stellt den durchzuführenden Reifenaufbauzyklus zusammen. Es werden alle für den Reifen relevanten Komponenten aneinandergereiht und in die richtige zeitliche Abfolge gebracht.

Unter Verwendung der Synchronisation (14) erfolgt ebenfalls eine Koordinierung von Servoverstärkern (16). Die Servoverstärker (16) sind über einen Kommunikationsweg (17) mit der unteren Softwareebene (12) gekoppelt, der ebenfalls einen Austausch von Befehlen und Rückmeldungen ermöglicht.

Der Componente Sequenzer (10) überprüft die Weiterfahrbedingungen der Leitachse (9) und fährt diese auch. Gegebenenfalls fehlende Kopplungen werden angefordert.

Die virtuelle Achse (9) übt die Funktion eines Device Sequenzers aus. Hieraus folgt, daß von der Leitachse (9) auch Ventilansteuerungen übernommen werden. Die virtuelle Achse (9) fährt typischerweise kontinuierlich und mit konstanter Geschwindigkeit. Die virtuelle Achse (9) ihrerseits ist eine Leitachse für eine Mehrzahl untergeordneter Servoachsen (6). Die virtuelle Achse (9) kommt immer dann zum Stehen, wenn der Componente Sequenzer (10) eine fehlende Weiterschaltbedingung erkannt hat. Dies kann beispielsweise das Fehlen einer aktiven Kopplung einer am Prozeß beteiligten Achse sein. In diesem Fall bleibt die virtuelle Achse (9) so lange stehen, bis alle Weiterschaltbedingungen erfüllt sind. Sind die Bedingungen erfüllt, fährt der Componente Sequenzer (10) die virtuelle Achse (9) bis zur nächsten Zwischenposition weiter. Sobald alle Bedingungen für das Anfahren einer neuen Zwischenposition erfüllt sind, wird die nächste Zwischenposition als neue Zielposition aktiviert. Die virtuelle Achse (9) fährt typischerweise zu diesem Zeitpunkt noch zur vorangehenden Zwischenposition.

Unter einer Servoachse (6) wird vorstehend ein Aktor verstanden, der beispielsweise als ein Servomotor ausgebildet ist.

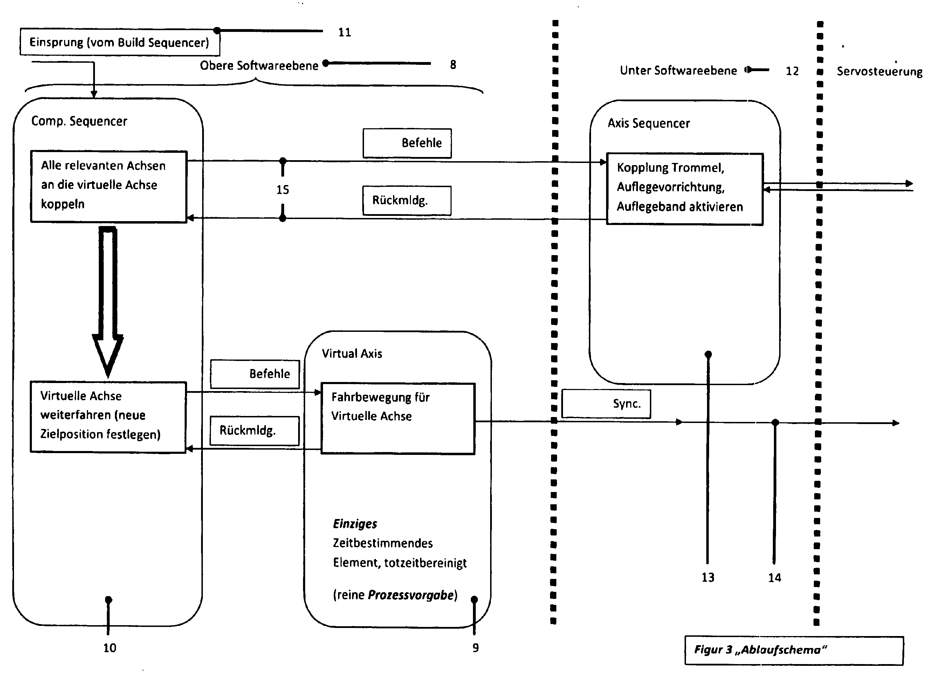

Fig. 3 zeigt ein Ablaufschema für eine ausgewählte Komponente entsprechend dem erfindungsgemäßen verfahren ohne auftretende Totzeiten. Ein Eintritt in den Verfahrensablauf erfolgt ausgehend vom Buildsequenzer (11) in den Componente Sequenzer (10). Der Componente Sequenzer (10) koppelt alle relevanten Achsen an die virtuelle Achse (9) und gibt ein Weiterfahren der virtuellen Achse (9) vor. Beim dargestellten Ausführungsbeispiel ist der Kommunikationsweg (15) in separate Wege für die Übermittlung von Befehlen vom Componente Sequenzer (10) zur unteren Softwareebene (12) und für Rückmeldungen von der unteren Softwareebene (12) zum Componente Sequenzer (10) ausgebildet. Im Bereich der unteren Softwareebene (12) führt der Achsensequenzer (13) eine Kopplung der Reifenaufbautrommel und der Auflegevorrichtung durch und aktiviert gegebenenfalls das Auflegeband. Der Achsensequenzer (13) steht mit der zugeordneten Servosteuerung in Verbindung.

Die virtuelle Achse (9) ist über einen Kommunikationsweg für Befehle und Rückmeldungen mit dem Componente Sequenzer (10) gekoppelt. Es werden gegebenenfalls Fahrbewegungen der virtuellen Achse durchgeführt. Die virtuelle Achse (9) ist das einzige zeitbestimmende Element. Hierdurch kann der Prozeß totzeitbereinigt durchgeführt werden. Die Zeitfestlegung erfolgt über die Synchronisation (14).

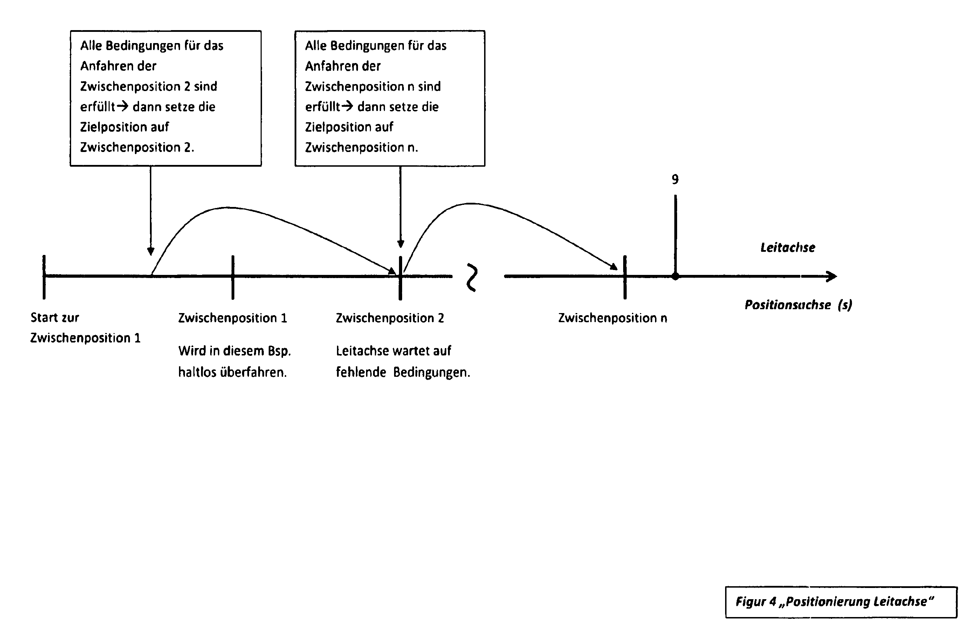

Fig. 4 veranschaulicht Positionen für die Leitachse (9). Es erfolgt zunächst ein Start zu einer ersten Zwischenposition. Wenn alle Bedingungen für das Anfahren der zweiten zwischenposition erfüllt sind, wird die Zielposition auf die zweite Zwischenposition gesetzt. Beim dargestellten Beispiel wird die Zwischenposition (1) ohne ein Anhalten des transportierten Bauelementes überfahren.

Allgemein gilt, daß bei einer Erfüllung aller Bedingungen für das das Anfahren einer n-ten Position die Zielposition auf diese Zwischenposition n gesetzt wird. Beim dargestellten Beispiel wartet die Leitachse bei der Zwischenposition (2) auf zu diesem Zeitpunkt noch fehlende Bedingungen.

Entsprechend dem erfindungsgemäßen Steuerverfahren werden vorhandene Bewegungsdaten für die verwendeten Servomotoren mathematisch analysiert und durch ein Gleichungssystem beschrieben. Die entsprechende mathematische Beschreibung erfolgt für jede Bewegung jeder beteiligten Servoachse. Aufgrund der entsprechenden Gleichungen ist es möglich, daß von der Steuerung eine vorausberechnung der zu erwartenden Achsbewegungen durchgeführt wird. Aufgrund dieses Prozeßmodells ist es insbesondere möglich, ruckfreie Bewegungen durchzuführen. Hierdurch kann die mechanische Belastung der Antriebselemente verringert und die Lebensdauer der gesamten Maschine vergrößert werden. Darüber hinaus führt die kontinuierliche Bewegungsdurchführung in der Regel zu verkürzten Bewegungszeiten.

Gemäß einer Erfindungsvariante ist insbesondere daran gedacht, die Gleichungssysteme und die entsprechenden Bewegungsdaten zur Laufzeit in der Steuerung zu berechnen. Insbesondere ist es möglich, die berechneten Bewegungsdaten als skalierte Tabellen an die Servosteuerung zu übermitteln.

Der Grad des Gleichungssystems hängt ab von der Anzahl der einzuhaltenden Nebenbedingungen. Insbesondere ist daran gedacht, als Gleichungssystem ein Polynom n-ter Ordnung zu verwenden, wobei sich n aus der Anzahl der n+1 Nebenbedingungen ergibt. Gemäß einem Ausführungsbeispiel werden für den Anfang und das Ende einer Bewegung jeweils der Ort, die Geschwindigkeit und die Beschleunigung bzw. Abbremsung vorgegeben. Es liegen in diesem Fall sechs Nebenbedingungen vor. Alle Gleichungssysteme werden zur Laufzeit in der Steuerung in Echtzeit berechnet, und die entsprechenden Bewegungstabellen damit erzeugt. Dadurch können bei Bedarf auch für jeden Reifen neue Bewegungsdaten erzeugt werden.

Zu einem Steuerungsbeginn, der einem Beginn des Reifenaufbauprozesses entspricht, werden alle am Prozeß beteiligten Achsen durch die Servosteuerung an die virtuelle Leitachse (9) der Zentralsteuerung angekoppelt. Diese Kopplung ist für jede der Servoachsen (6) so lange aktiv, wie die betreffende Servoachse (6) am Prozeß beteiligt ist. Gemäß einer Ausführungsvariante entspricht jeder Position der virtuellen Achse (9) in der Servosteuerung einer Position für jeden Servomotor. Die virtuelle Achse (9) arbeitet somit als Master und die Servosteuerung als Slave. Hierdurch ist vorgegeben, daß die den Slaves zugeordneten Servoachsen dem berechneten Bewegungsprofil der Achse (9) folgen, ohne daß während des Prozeßablaufes ein Datenaustausch während des Prozeßablaufes zwischen den einzelnen Steuerungen notwendig ist. Entsprechende Übertragungszeiten und hierdurch verursachte Totzeiten werden dadurch während des Prozesses vermieden.

## Patentansprüche

1. Verfahren zur Steuerung der Produktion von Reifen, bei dem der Produktionsprozeß in mindestens zwei zeitlich aufeinanderfolgende Prozeßschritte unterteilt ist und bei dem ein während der einzelnen Prozeßschritte beaufschlagter Reifenrohling und/oder mindestens ein bei mindestens einem der Prozeßschritte verwendetes Werkzeug und/oder Material von mindestens zwei Handhabungsvorrichtungen bewegt werden, sowie bei dem mindestens eine einem ersten Prozeßschritt zugeordnete Bewegung zeitlich wenigstens teilweise überlappend mit einer einem zweiten Prozeßschritt zugeordneten Bewegung durchgeführt wird, **dadurch gekennzeichnet, daß** die Handhabungseinrichtungen während mindestens eines Teiles Ihres Bewegungsablaufes gleichzeitig angetrieben werden.

2. Verfahren nach Anspruch 1, **dadurch gekennzeichnet, daß** eine kontinuierlich laufende Leitachse und der Leitachse untergeordnete lokale Steuerungen der Aktoren verwendet werden.

3. Verfahren nach Anspruch 1 oder 2, **dadurch gekennzeichnet, daß** von der Leitachse eine Ventilansteuerung durchgeführt wird.

4. Verfahren nach einem der Ansprüche 1 bis 3, **dadurch gekennzeichnet, daß** die Leitachse bei einem Nichteintreten einer Weiterschaltbedingung angehalten wird.

5. Verfahren nach einem der Ansprüche 1 bis 4, **dadurch gekennzeichnet, daß** die Leitachse eine zeitliche Koordninierung von Teilprozessen durchführt.

6. Verfahren nach einem der Ansprüche 1 bis 5, **dadurch gekennzeichnet, daß** mehrere lokale Steuerungen der Aktoren einer gemeinsamen Leitachse zugeordnet werden.

7. Verfahren nach einem der Ansprüche 1 bis 6, **dadurch gekennzeichnet, daß** von der Leitachse Servomotoren angesteuert werden.

8. Verfahren nach einem der Ansprüche 1 bis 7, **dadurch gekennzeichnet, daß** die Leitachse als virtuelle Achse (9) realisiert wird.

9. Verfahren nach einem der Ansprüche 1 bis 8, **dadurch gekennzeichnet, daß** die Leitachse durch ein Digitalprogramm realisiert wird.

10. Verfahren nach einem der Ansprüche 1 bis 9, **dadurch gekennzeichnet, daß** Übergaben mindestens teilweise mit einer Geschwindigkeit ungleich null durchgeführt werden.

11. Verfahren nach einem der Ansprüche 1 bis 10, **dadurch gekennzeichnet, daß** mindestens teilweise kontinuierliche Bewegungsbahnen durchlaufen werden.

12. Verfahren nach einem der Ansprüche 1 bis 11, **dadurch gekennzeichnet, daß** Bewegungsdaten von Servomotoren durch ein Gleichungssystem n-ter Ordnung bei n+1 Nebenbedingungen beschrieben und mit dem Gleichungssystem eine Vorausberechnung der zu erwartenden Bewegungen durchgeführt wird.

13. Vorrichtung zur Steuerung der Produktion von Reifen, die eine Ablaufsteuerung zur Koordinierung von mindestens zwei zeitlich aufeinanderfolgenden Prozeßschritten aufweist sowie die mindestens zwei Handhabungseinrichtungen zur Positionierung eines Reifenrohlings und/oder mindestens eines für die Durchführung mindestens eines der Prozeßschritte vorgesehenen Werkzeuges und/oder Materials aufweist, **dadurch gekennzeichnet, daß** die Handhabungseinrichtungen während mindestens eines Teiles Ihres Bewegungsablaufes gleichzeitig angetrieben sind.

14. Vorrichtung nach Anspruch 13, **dadurch gekennzeichnet, daß** eine Leitachse kontinuierlich laufend ausgebildet lokalen Steuerungen der Aktoren übergeordnet ist.

15. Vorrichtung nach Anspruch 13 oder 14, **dadurch gekennzeichnet, daß** die Leitachse als Ventilsteuerung ausgebildet ist.

## Claims

1. Method for controlling the production of tyres, in which the production process is divided into at least two process stages that are consecutive in time and in which a tyre blank acted upon during the individual process stages and/or at least one tool and/or material used in at least one of the process stages are moved by at least two handling devices, and in which at least one movement assigned to a first process stage is executed at least partially overlapping in time with a movement assigned to a second process stage, **characterised in that** the handling devices are driven simultaneously during at least a part of their movement sequence.

2. Method according to claim 1, **characterised in that** a continuously running master axis and local controllers of the actuators, which controllers are subordinate to the master axis, are used.

3. Method according to claim 1 or 2, **characterised in that** a valve activation is executed by the master axis.

4. Method according to one of claims 1 to 3, **characterised in that** the master axis is stopped if a step enabling condition fails to materialise.

5. Method according to one of claims 1 to 4, **characterised in that** the master axis carries out a coordination in time of sub-processes.

6. Method according to one of claims 1 to 5, **characterised in that** several local controllers of the actuators are assigned to a common master axis.

7. Method according to one of claims 1 to 6, **characterised in that** servomotors are activated by the master axis.

8. Method according to one of claims 1 to 7, **characterised in that** the master axis is realised as a virtual axis (9).

9. Method according to one of claims 1 to 8, **characterised in that** the master axis is realised by a digital program.

10. Method according to one of claims 1 to 9, **characterised in that** transfers are executed at least partly at a velocity not equal to zero.

11. Method according to one of claims 1 to 10, **characterised in that** at least partly continuous paths of motion are gone through.

12. Method according to one of claims 1 to 11, **characterised in that** movement data of servomotors are described by a system of equations of the nth order with n+1 secondary conditions and a projection of the movements to be expected is carried out using the system of equations.

13. Device for controlling the production of tyres, which has a sequence control system for the coordination of at least two process stages that are consecutive in time and has the at least two handling devices for the positioning of a tyre blank and/or of at least one tool and/or material provided for the execution of at least one of the process stages, **characterised in that** the handling devices are driven simultaneously during at least a part of their movement sequence.

14. Device according to claim 13, **characterised in that** a master axis formed to run continuously is superordinate to local controllers of the actuators.

15. Device according to claim 13 or 14, **characterised in that** the master axis is formed as a valve controller.

## Revendications

1. Procédé de commande pour la production de pneus, dans lequel le processus de production est divisé en au moins deux étapes de processus, qui se succèdent dans le temps, et dans lequel un pneu non-vulcanilisé est traité pendant les différentes étapes du processus et / ou au moins un outil est utilisé pendant au moins une étape du processus, et / ou du matériel est mû par au moins deux dispositifs de manutention, ainsi que dans lequel au moins un mouvement, associé à la première étape du processus, est exécuté au moins partiellement en même temps qu'un mouvement associé à la deuxième étape du processus, **caractérisé en ce que** les dispositifs de manutention sont actionnés simultanément, pendant au moins une partie de leur course.

2. Procédé selon la revendication 1, **caractérisé en ce que** sont utilisés un axe directeur en marche continue et des commandes locales des actionneurs, qui sont esclaves par rapport à l'axe directeur.

3. Procédé selon revendication 1 ou 2, **caractérisé en ce qu'**une commande de soupapes est exécutée par l'axe directeur.

4. Procédé selon l'une des revendications 1 à 3, **caractérisé en ce que** l'axe directeur est arrêté lorsqu'une condition de commutation suivante ne se présente pas.

5. Procédé selon l'une des revendications 1 à 4, **caractérisé en ce que** l'axe directeur exécute une coordination temporelle de processus partiels.

6. Procédé selon l'une des revendications 1 à 5, **caractérisé en ce que** plusieurs commandes locales des actionneurs sont associées à un axe directeur commun.

7. Procédé selon l'une des revendications 1 à 6, **caractérisé en ce que** des servomoteurs sont commandés par l'axe directeur.

8. Procédé selon l'une des revendications 1 à 7, **caractérisé en ce que** l'axe directeur est réalisé en tant qu'axe virtuel (9).

9. Procédé selon l'une des revendications 1 à 8, **caractérisé en ce que** l'axe directeur est déterminé par un programme numérique.

10. Procédé selon l'une des revendications 1 à 9, **caractérisé en ce que** des transferts sont exécutés, au moins partiellement, à une vitesse non nulle.

11. Procédé selon l'une des revendications 1 à 10, **caractérisé en ce que** des voies de mouvement au moins partiellement continues, sont parcourues.

12. Procédé selon l'une des revendications 1 à 11, **caractérisé en ce que** les données de mouvements de servomoteurs sont décrites par un système d'équations d'ordre n pour n+1 contraintes et qu'un calcul préliminaire des mouvements escomptés est exécuté avec le système d'équations.

13. Dispositif de commande pour la production de pneus, qui est doté d'une commande de déroulement pour la coordination d'au moins deux étapes de processus, qui se succèdent dans le temps, ainsi que d'au moins deux dispositifs de manutention pour le positionnement d'un pneu non-vulcanilisé et / ou d'au moins un outil et ou d'un matériel pour l'exécution d'au moins l'une des étapes du processus, **caractérisé en ce que** les dispositifs de manutention sont actionnés simultanément pendant au moins une partie de leur course.

14. Dispositif selon la revendication 13, **caractérisé en ce qu'**un axe directeur, conçu à marche continue, est maître par rapport aux commandes locales d'acteurs.

15. Dispositif selon revendication 13 ou 14, **caractérisé en ce que** l'axe directeur est réalisé sous la forme d'une commande à soupapes.
